(19) Europäisches Patentamt
European Patent Office
Office européen des brevets

(11) **EP 1 360 522 B1**

(12) **FASCICULE DE BREVET EUROPEEN**

(45) Date de publication et mention
de la délivrance du brevet:
**17.09.2008 Bulletin 2008/38**

(51) Int Cl.:
***G01S 5/18*** *(2006.01)* ***G01S 11/14*** *(2006.01)*

(21) Numéro de dépôt: **02703654.0**

(86) Numéro de dépôt international:
**PCT/FR2002/000440**

(22) Date de dépôt: **05.02.2002**

(87) Numéro de publication internationale:
**WO 2002/067008 (29.08.2002 Gazette 2002/35)**

(54) **PROCEDE DE DETECTION D'OBJETS MOBILES AU MOYEN DE BOUEES SOUS-MARINES PASSIVES**

VERFAHREN ZUR DETEKTION VON BEWEGLICHEN OBJEKTEN MITTELS PASSIVEN UNTERWASSERBOJEN

METHOD FOR DETECTING MOBILE OBJECTS USING PASSIVE SUBMARINE BUOYS

(84) Etats contractants désignés:
**DE GB IT**

(30) Priorité: **16.02.2001 FR 0102176**

(43) Date de publication de la demande:
**12.11.2003 Bulletin 2003/46**

(73) Titulaire: **Thales**
**75008 Paris (FR)**

(72) Inventeurs:
• **KERVERN, Gilles,**
**Thales Intellectual Property**
**F-94117 Arcueil Cedex (FR)**

• **BILLON, Didier,**
**Thales Intellectual Property**
**F-94117 Arcueil Cedex (FR)**
• **LE GALL, Jean,**
**Thales Intellectual Property**
**F-94117 Arcueil Cedex (FR)**

(74) Mandataire: **Lucas, Laurent Jacques**
**Marks & Clerk France**
**31-33 Avenue Aristide Briand**
**94117 Arcueil Cedex (FR)**

(56) Documents cités:
WO-A-01/09639 FR-A- 2 688 595
FR-A- 2 777 088

## Description

La présente invention se rapporte aux systèmes qui permettent de localiser et d'identifier des objets sous-marins de manière acoustique à l'aide d'un ensemble de bouées sous-marines passives.

Elle concerne plus particulièrement les moyens de traitement des signaux de réception de ces bouées, qui sont transmis généralement par voie radioélectrique à une base de traitement le plus souvent située à bord d'un aéronef.

On sait repérer par leur bruit des objets immergés sous la mer, des sous-marins par exemple, en larguant des bouées acoustiques passives depuis un avion équipé à cet effet. Ainsi dans le brevet français déposé sous le N° 9203005, le 13 Mars 1992 au nom de THOMSON-CSF et publié le 17 septembre 1993 sous le n° 2 688 595, il est décrit un système de détection au moyen d'un réseau de bouées sous-marines passives de type connu sous le nom de "DIFAR" (Directional Frequency Analysis and Recording) et plus particulièrement un procédé de traitement permettant de localiser plusieurs bruiteurs. Ce procédé est incomplet et ne permet pas en particulier de déterminer les vitesses des bruiteurs. En ce sens, le procédé ne permet pas d'établir une carte "EGP" complète, EGP étant l'abréviation de l'expression anglo-saxonne Energy Geographic Plot.

Pour compléter ce procédé, l'invention propose un procédé de détection d'objets mobiles au moyen de bouées sous-marines passives permettant d'obtenir des cartes dites EGP, chaque bouée permettant la formation de $N_v$ voies directives, principalement caractérisé en ce que l'on traite les signaux des bouées en trois étapes :

- une première étape (90-102) permettant d'obtenir une carte EGP des positions en x, y des objets,
- une deuxième étape (110-120) permettant d'obtenir une carte EGP des vitesses Vx, Vy ainsi qu'un spectre estimé pour chaque position quelconque x,y de la carte EGP des positions, ces cartes présentant les lieux d'ambiguïté Doppler,
- une troisième étape (140-144) permettant l'élimination des cartes des objets considérés comme des bruiteurs forts.

Selon une autre caractéristique, la première étape consiste à réaliser une carte EGP des positions par une itération d'opérations de détection sur l'ensemble des canaux fréquentiels constituant la bande analysée, chaque détection étant obtenue par comparaison du rapport de vraisemblance généralisé à un seuil, et à chaque détection on associe un résumé décisionnel contenant les coordonnées x,y, le rapport signal à bruit RSB, la distribution de probabilité de présence du maximum, représentant une cible ou bruiteur éventuel, et, pour chaque bouée, sa contribution relative au maximum.

Selon une autre caractéristique, la deuxième étape consiste, pour chaque détection sur la carte EGP des positions, issue de la première étape, à sélectionner les canaux fréquentiels ayant participé à la détection en utilisant la donnée "distribution de probabilité de présence", à fusionner les données "RSB" qui correspondent à ces canaux donnant un spectre global, à déduire les spectres de l'objet vus par chaque bouée en utilisant la donnée "contribution relative", à regrouper les fréquences homologues de spectre à spectre, à calculer la moyenne de ces fréquences homologues donnant ainsi un spectre représentant le profil spectral du bruiteur supposé placé au maximum, à calculer les Dopplers différentiels entre les bouées à partir de ce spectre, permettant d'obtenir les vitesses V, V, correspondant à cette détection, à itérer le processus pour toutes les détections et, à la fin de la bande analysée à associer les vitesses V, V, aux coordonnées x,y pour obtenir une carte EGP des vitesses.

Selon une autre caractéristique, la troisième étape consiste, pour chaque bruiteur à éliminer, repéré sur la carte EGP des positions, à sélectionner à nouveau les canaux fréquentiels, à estimer la puissance du bruiteur pour calculer le niveau théorique de signal en provenance du bruiteur et à le soustraire au niveau réel, à itérer cette soustraction pour chaque canal fréquentiel pour, à la fin de la bande analysée, recommencer les étapes 1 et 2 précédentes.

Selon une autre caractéristique, les étapes 1 et 2 sont fusionnées en itérant sur les canaux fréquentiels, avant d'effectuer la détection; le calcul des Dopplers différentiels étant pris en compte dans le critère de détection.

D'autres particularités et avantages de l'invention apparaîtront clairement dans la description suivante, présentée à titre d'exemple non limitatif en regard des figures annexées qui représentent :

- la figure 1, un diagramme du procédé selon l'invention;
- la figure 2, une variante de ce procédé.

Selon l'invention, le procédé comporte principalement :

- une fusion des données faite sur l'ensemble des bouées au moyen du rapport de vraisemblance des observations spectrales,
- l'utilisation des Dopplers différentiels après estimation des fréquences émises,
- l'annulation de bruiteurs intégrés dans les traitements de fusion spatiale et de Doppler précédents.

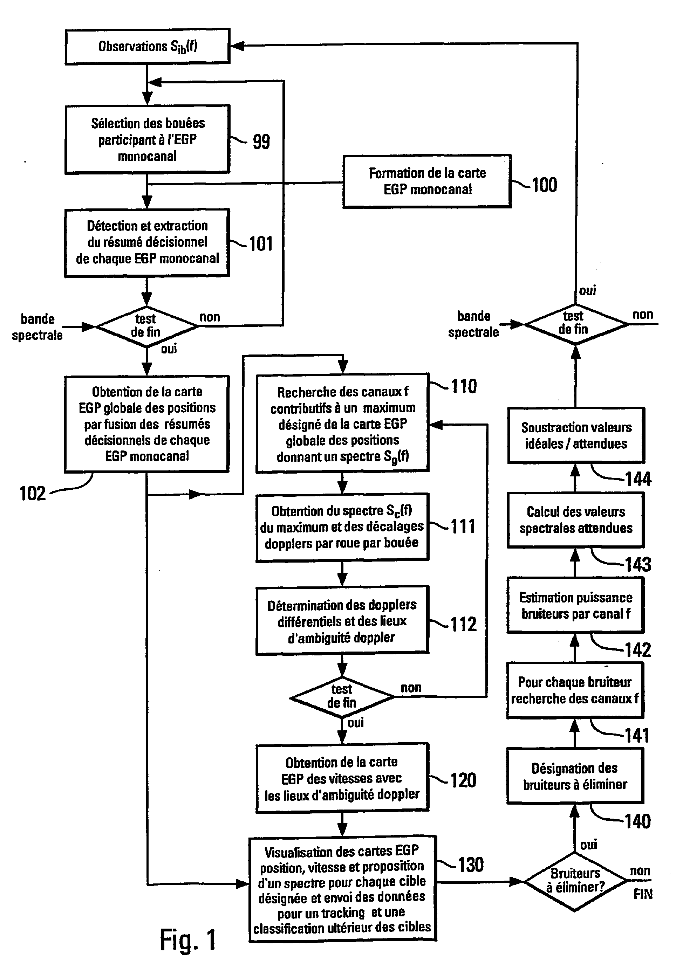

La figure 1 représente le traitement des signaux fournis par les bouées DIFAR et aboutissant, à l'établissement d'une carte EGP des positions et pour chaque bruiteur, désignés automatiquement ou par l'opérateur, à une carte EGP des vitesses.

Les données en entrée sont constituées par les spectres normalisés (x/moyenne estimée) $S_{i,b}(f)$ avec

$1 \leq i \leq N_v$ (nombre de voies)

$1 \leq b \leq N$ (nombre de bouées).

Pour chaque bouée, on forme un nombre de voies suffisant, par exemple $N_v \geq 6$, pour que la perte de détection due à la différence entre la direction de pointage et le gisement de la source soit négligeable

Selon l'invention, le traitement est effectué en 3 étapes :

- étape 1 : détermination des positions des bruiteurs;
- étape 2 : détermination de la vitesse et du spectre de quelques bruiteurs désignés automatiquement ou par l'opérateur;
- étape 3 : élimination des bruiteurs forts.

Dans l'étape 1, pour chaque canal fréquentiel des spectres, on commence par éliminer les composants spectrales des bouées dont le niveau en puissance est insuffisant dans une opération 99. On écarte ainsi, en présence d'une "raie forte", les bouées ne recevant pas cette raie du fait de l'effet Doppler, de façon à ne pas biaiser l'estimation de la position du bruiteur par la méthode du maximum de vraisemblance. En l'absence de raie forte, on conserve les contributions de toutes les bouées. Pour cela on compare la puissance du signal reçu pour un canal fréquentiel à un seuil normalisé égal à la somme de la moyenne du bruit spectral et du produit du seuil de test choisi par l'écart-type du bruit spectral : une valeur typique du seuil de test est 4, l'écart-type vaut

$0.5227/\sqrt{N_{SI}}$ ($N_{si}$ : nombre de spectres intégrés) et la puissance moyenne du bruit vaut 1.

On obtient ainsi, un ensemble de composantes spectrales, noté $R_{i,b}(f)$ avec $1 \leq b \leq M$, M étant inférieur ou égal à N si certaines bouées ne franchissent pas le seuil. L'ensemble de ces composants spectrales constitue le vecteur d'observations X du canal fréquentiel considéré.

Ensuite, dans une opération 100, on calcule la racine carrée du rapport de vraisemblance généralisé des observations, formant ainsi une carte EGP$_f$ du canal spectral f:

L'expression calculée est :

$$I(x,y) = \frac{1}{\sqrt{2}} \frac{\left|(X-\Gamma)^T R^{-1} S\right|}{\sqrt{S^T R^{-1} S}}$$

dans laquelle :

X : vecteur de dimension $N_v.M$ des composantes spectrales $R_{i,b}$

r : vecteur donnant le niveau moyen du bruit sur chaque voie de chaque bouée.

$C^{-1}$: matrice inverse de la covariance de l'observation pour une seule bouée telle que :

$$R^{-1} = \begin{bmatrix} c_1^{-1} \cdots & c_i^{-1} \cdots \\ & c_N^{-1} \end{bmatrix}$$

$R^{-1}$ matrice inverse de la covariance de l'observation sur $N_v$ bouées.

S : vecteur des valeurs représentant la sensibilité des différentes voies des différentes bouées pour une cible située en position géographique (x,y).

Puis dans une opération 101 d'abord, on effectue la détection d'une cible sur la carte EGP f monocanal et on établit ensuite pour celle-ci un "résumé décisionnel".

La détection consiste :

- à fixer une probabilité de fausse alarme constante en chaque point de la carte EGP$_f$,
- à calculer un seuil $I_o$, indépendant de la position du maximum, égal à la somme de la moyenne du bruit de la carte et du produit du seuil de test par l'écart-type du bruit de la carte.
- à rechercher les maxima par seuillage avec $I_o$.

Le résumé décisionnel associé à chaque détection est constitué des éléments suivants :

- les coordonnées x,y
- le rapport signal à bruit RSB = (amplitude/écart type bruit)$^2$
- la distribution de probabilité de présence du maximum, c'est-à-dire la frontière à probabilité 0.95 déterminée par le franchissement ou non du seuil égal

à $\max - \dfrac{k}{\max}$ , k étant un coefficient compris entre 1,5 et 3 pour tenir compte des déviations par rapport aux statistiques attendues, la localisation du maximum suivant approximativement un processus de type Woodward.

- les contributions relatives de chaque bouée, soit pour une bouée le rapport entre le niveau de la voie pointant au plus près du maximum et la somme de ces niveaux pour toutes les bouées.

On répète le traitement correspondant aux opérations 99,100,101 pour tous les canaux fréquentiels de la bande analysée, qui peut être de largeur quelconque.

A la fin de cette étape 1, par fusion des coordonnées x,y des résumés décisionnels, on obtient la carte EGP globale des positions (102) des objets ainsi localisés.

Dans l'étape 2, on commence par rechercher, dans une opération 110, sur l'ensemble, ou sur une partie, des maxima de la carte EGP globale des positions, les canaux fréquentiels ayant participé à la construction de chaque maximum. Pour cela, on utilise la donnée relative à la distribution de probabilité de présence des résumés décisionnels. Si la position du maximum est contenue dans la frontière à probabilité 0,95. Les canaux fréquentiels indiquent les différentes fréquences d'émission de la cible observées par l'une des quelconques bouées du réseau. L'ensemble des canaux participant définit un spectre global de l'objet, toutes bouées confondues, tel que Sg(f) = RSB (f), les RSB (F) étant pris dans les résumés décisionnels.

Puis, dans une opération 111, avec les valeurs des contributions relatives de chaque bouée prises dans les résumés décisionnels, on détermine à partir de $S_g(f)$ les spectres de l'objet vus par chaque bouée, soit :

$$S_b(f) = S_g(f) \times contribution\ (b,f).$$

On fait ensuite un regroupement /appariement, de spectre de bouée à spectre de bouée, des fréquences homologues qui ne sont décalées que par l'effet Doppler. Ceci est obtenu par corrélation de portions des spectres $S_b(f)$ du maximum EGP (et donc de la cible). On obtient ainsi les décalages Dopplers observés, pour une même raie, d'une bouée à l'autre, ainsi que par moyennage une estimation des fréquences émises par la cible Sc(f).

On continue le traitement en effectuant, dans une opération 112, pour chacune des raies ou des portions de fort niveau du spectre $S_c(f)$, le calcul des Dopplers différentiels (différences de fréquence) observés entre les bouées, permettant d'obtenir les vitesses $V_x$, $V_y$ de l'objet.

On détermine ensuite les lieux d'ambiguïté Doppler associés à chacune des différences de fréquence observées. Ces lieux sont des bandes parallèles à la bissectrice de l'angle formé par les deux droites reliant la position de l'objet aux bouées $b_i, b_j$. La largeur de ces bandes dépend de la finesse des canaux fréquentiels de l'analyse spectrale. Avantageusement, chaque bande est affectée d'un niveau maximum égal à $S_{bi}(f) \times S_{bj}(f)$.

On répète le traitement correspondant aux opérations 110,111 et 112 pour tous les maxima sélectionnés sur la carte EGP. A la fin de cette étape 2, en associant les vitesses $V_x$, $V_y$ aux coordonnées x,y des maxima et en sommant les lieux d'ambiguïté Doppler, on obtient la carte EGP des vitesses des objets localisés, avec les lieux d'ambiguïté Doppler.

Selon l'invention, le procédé intègre l'élimination des cartes EGP des objets qui sont des "bruiteurs" forts. Le traitement forme l'étape 3. Elle est constituée des sous-étapes suivantes :

- désignation dans une opération 140 par l'opérateur des coordonnées x,y des bruiteurs à éliminer sur la carte EGP des positions,
- pour chaque bruiteur dans une opération 141, itération de la procédure qui correspond à l'opération 110,

- pour chaque canal fréquentiel, dans une opération 142 estimation de la puissance du bruiteur égale à

$$\frac{\sqrt{RSB}}{\sqrt{S^T R^{-1} S}}$$ où S est le vecteur représentant la sensibilité des voies des bouées pour la position occupée par le bruiteur, RSB étant une valeur conservée dans le résumé décisionnel,

- puis, compte tenu de la puissance estimée et des coordonnées x,y du bruiteur, dans une opération 143 on calcul pour chacune des voies de chacune des bouées, le niveau théorique de signal en provenance du bruiteur, fournissant un vecteur A des valeurs spectrales attendues,
- finalement pour un canal fréquentiel, dans une opération 144 calcul du vecteur X-A qui remplace alors X.

On répète le traitement correspondant aux opérations 142,143,144 pour tous les canaux fréquentiels ayant participé à la construction du signal du bruiteur. Une fois la bande de fréquence explorée, on applique aux nouvelles observations le traitement des étapes 1 et 2 jusqu'à qu'il n'y ait plus de buiteurs à éliminer.

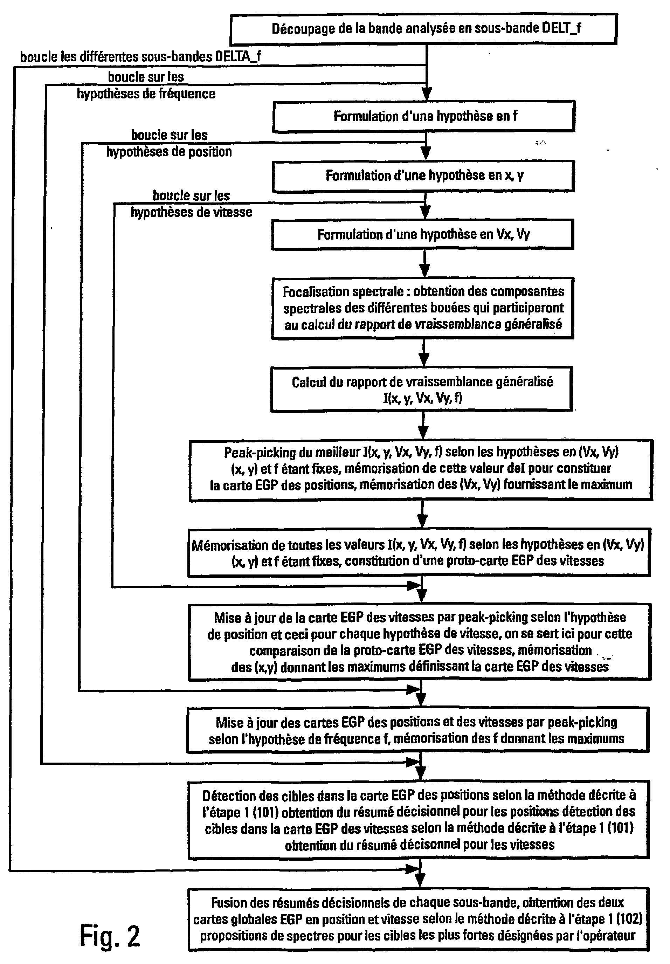

Suivant une variante, les étapes 1 et 2 peuvent être ramenées à une seule moyennant une augmentation de la charge de calcul. Dans cette variante, la fusion en fréquence est faite avant la détection et les Dopplers différentiels sont pris en compte dans le critère de détection. La figure 2 représente l'organigramme de la variante qui remplace dans la figure 1 les opérations allant de 99 à 130

Dans une bande spectrale Δ f large au plus de quelques dizaines de Hz, et légèrement plus large que les décalages Doppler maximum attendus :

- pour chaque fréquence d'analyse f appartenant à la bande précédente Δf,
- pour chaque position (x,y) dans la carte EGP,
- pour une hypothèse ($v_x$, $v_y$) de vitesse possible du bruiteur en cette position (x,y), et l'on balayera par la suite toutes ces hypothèses {f,(x,y), ($v_x$, $v_y$)},

On calcule les décalages Doppler que l'on devrait avoir sur les différentes bouées du réseau et l'on reconstitue un vecteur d'observation des signaux de bouées en sélectionnant pour chaque bouée les sorties des canaux spectraux dont la fréquence est la fréquence supposée d'émission du bruiteur à laquelle on ajoute le décalage Doppler convenable. On forme donc ici un vecteur d'observation après une procédure réalisant en quelque sorte une "focalisation spectrale".

Une fois obtenue le vecteur d'observation après focalisation spectrale, on applique le processus de formation EGP,

$$I(x,y) = \frac{1}{\sqrt{2}} \frac{\left|(X-\Gamma)^T R^{-1} S\right|}{\sqrt{S^T R^{-1} S}},$$

tel que décrit précédemment dans l'étape 1 et ceci pour obtenir la valeur de la carte EGP pour les hypothèses considérées en fréquence d'émission, position et vitesse du bruiteur.

Le résultat de l'exploration des hypothèses balayées est faite par le procédé connu sous l'expression anglo saxonne "peak-picking", qui désigne une opération de prise de maximum dans un ensemble de nombres, et l'on forme deux résultats, l'un donnant une carte EGP des positions ("peak picking" sur les hypothèses fréquence et vitesse), l'autre donnant une carte EGP des vitesses ("peak-picking" sur les hypothèses fréquence et position). La comparaison des deux cartes EGP position et vitesse permet également, en repérant les différents bruiteurs, d'associer correctement position, vitesse et fréquence pour un même bruiteur.

Pour explorer par contre une bande B large de quelques milliers de Hz, pouvant contenir plus d'une centaine de sous-bandes de largeur $\Delta f$, sous-bandes a priori totalement indépendantes entre-elles, la variante propose d'appliquer la méthode suivante :

- découpage de B en sous-bandes $\Delta f$ se recouvrant pour moitié,
- formation des images EGP multi-hypothèses peak-pickées, en position et vitesse (comme dans le paragraphe précédent) pour chacune des sous-bandes,
- détection des éventuelles cibles dans les images EGP obtenues à l'issue du traitement de chaque sous-bande, comme cela est décrit en 101 dans l'étape 1; on obtient alors pour chaque sous-bandes deux résumés décisionnels,
- fusion des résultats de détection en utilisant les résumés décisionnels de la détection dans chaque sous-bande, comme cela est décrit en 102 dans l'étape 1,
- représentation des deux images fusionnées de position et de vitesse, en repérant les différents bruiteurs de façon à pouvoir associer position, vitesse et fréquence pour un même bruiteur.

On notera qu'avec cette variante, il est possible d'extraire plus d'une cible lors de l'opération de détection des éventuelles cibles dans les images EGP obtenues à l'issue du traitement de chaque sous-bande.

La soustraction de bruiteurs forts s'opère également avec cette variante selon une procédure similaire à celle décrite pour la méthode EGP initiale.

## Revendications

1. Procédé de détection d'objets mobiles au moyen de bouées sous marines passives, chaque bouée permettant la formation de **Nv** voies directives, ce procédé permettant d'obtenir des cartes dites EGP des échos détectés, **caractérisé en ce qu'**il comporte un traitement permettant de réaliser des cartes EGP associant la position des échos détectés à la vitesse des dits échos, ce traitement comportant au moins :

   - une première étape qui associe à chaque écho constituant la carte EGP des positions des échos détectés un ensemble de paramètres contenant les coordonnées x, y de l'écho, le rapport signal à bruit RSB du signal correspondant, la distribution de probabilité de présence du maximum, ainsi la contribution de chaque bouée relative au maximum;
   - une deuxième étape consistant, à sélectionner pour chaque écho détecté les canaux fréquentiels ayant participé à la détection en utilisant la donnée "distribution de probabilité de présence", puis à fusionner les données "RSB" qui correspondent à ces canaux pour obtenir un spectre global, à en déduire les spectres de l'objet vus par chaque bouée en utilisant la donnée "contribution relative", à regrouper les fréquences homologues de spectre à spectre, à calculer la moyenne de ces fréquences homologues donnant ainsi un spectre représentant le profil spectral du bruiteur supposé placé au maximum, à calculer les Dopplers différentiels entre les bouées à partir de ce spectre, permettant d'obtenir les vitesses Vx, Vy correspondant à cette détection, à itérer le processus pour toutes les détections et, à la fin de la bande analysée à associer les vitesses V" V, aux coordonnées x, y pour obtenir une carte EGP des vitesses;
   - une troisième étape d'élimination des bruiteurs forts désignés par l'opérateur, consistant-à estimer la puissance du bruiteur désigné pour calculer le niveau théorique de signal en provenance du bruiteur et à le soustraire au niveau réel, à itérer cette soustraction pour chaque canal fréquentiel de la bande analysée.

2. Procédé selon la revendication 1, **caractérisé en ce que** la carte EGP des positions est l'élaborée par une itération d'opérations de détection sur l'ensemble des canaux fréquentiels constituant la bande analysée, chaque détection étant obtenue par comparaison du rapport de vraisemblance généralisé à un seuil.

3. Procédé selon la revendication 1, **caractérisé en ce que** l'élaboration de la carte EGP des positions et la détermination des vitesses associées sont effectuées simultanément, le calcul des Dopplers différentiels étant pris en compte dans le critère de détection.

## Claims

1. Process for detecting mobile objects by means of passive underwater buoys, each buoy allowing the formation of $N_v$ directive pathways, this process making it possible to obtain so-called EGP maps of the echoes detected, **characterized in that** it comprises a processing making it possible to produce EGP maps associating the position of the echoes detected with the velocity of said echoes, this processing comprising at least:

   - a first step which associates with each echo constituting the EGP map of the positions of the echoes detected a collection of parameters containing the coordinates x,y of the echo, the signal-to-noise ratio SNR of the corresponding signal, the presence probability distribution for the maximum, as well as the contribution of each buoy relative to the maximum;
   - a second step consisting in selecting for each echo detected the frequency channels that have participated in the detection by using the "presence probability distribution" datum, then in merging the "SNR" data which correspond to these channels so as to obtain a global spectrum, in deducing therefrom the object's spectra seen by each buoy by using the "relative contribution" datum, in grouping together the spectrum-to-spectrum homologous frequencies, in calculating the average of these homologous frequencies thus giving a spectrum representing the spectral profile of the noise source supposedly placed at the maximum, in calculating the differential Dopplers between the buoys on the basis of this spectrum, making it possible to obtain the velocities $V_x, V_y$ corresponding to this detection, in iterating the procedure for all the detections and, at the end of the analyzed band in associating the velocities $V_x$, $V_y$, with the coordinates x,y so as to obtain an EGP map of the velocities;
   - a third step for eliminating strong sources of noise designated by the operator consisting in estimating the power of the noise source designated to calculate the theoretical level of the signal originating from the noise source and in subtracting it from the actual level, in iterating this subtraction for each frequency channel of the analyzed band.

2. Process according to Claim 1, **characterized in that** the EGP map of the positions is formulated by an iteration of operations of detection on the collection of frequency channels constituting the analyzed band, each detection being obtained by comparison of the generalized likelihood ratio with a threshold.

3. Process according to Claim 1, **characterized in that** the formulation of the EGP map of the positions and the determination of the associated velocities are performed simultaneously, the calculation of the differential Dopplers being taken into account in the detection criterion.

## Patentansprüche

1. Verfahren zur Erfassung beweglicher Gegenstände mit Hilfe passiver Unterwasserbojen, wobei jede Boje die Bildung von Nv Richtkanälen ermöglicht, wobei dieses Verfahren es ermöglicht, so genannte EGP-Karten (Energy Geographic Plot) der erfassten Echos zu erhalten, **dadurch gekennzeichnet, dass** es eine Verarbeitung aufweist, die es ermöglicht, EGP-Karten herzustellen, die die Position der erfassten Echos der Geschwindigkeit der Echos zuordnen, wobei diese Verarbeitung mindestens aufweist:

   - einen ersten Schritt, der jedem die EGP-Karte der Positionen der erfassten Echos bildenden Echo eine Einheit von Parametern zuordnet, die die Koordinaten x, y des Echos, das Signal/Rausch-Verhältnis RSB des entsprechenden Signals, die Präsenzwahrscheinlichkeitsverteilung des Maximums sowie den relativen Beitrag jeder Boje zum Maximum enthält;
   - einen zweiten Schritt, der darin besteht, für jedes erfasste Echo die Frequenzkanäle auszuwählen, die an der Erfassung beteiligt waren, unter Verwendung des Datenwerts "Präsenzwahrscheinlichkeitsverteilung", dann die diesen Kanälen entsprechenden Daten "RSB" zu fusionieren, um ein globales Spektrum zu erhalten, davon die Spektren des Gegenstands abzuleiten, die von jeder Boje gesehen werden, unter Verwendung des Datenwerts "relativer Beitrag", die homologen Frequenzen von Spektrum zu Spektrum zusammenzufassen, den Mittelwert dieser homologen Frequenzen zu berechnen, was zu einem Spektrum führt, das das spektrale Profil des Geräuscherzeugers darstellt, von dem angenommen wird, dass er sich auf dem Maximum befindet, die differentiellen Doppler-Effekte zwischen den Bojen ausgehend von diesem Spektrum zu berechnen, was es ermöglicht, die Geschwindigkeiten Vx, Vy zu erhalten, die dieser Erfassung entsprechen, den Prozess für alle Erfassungen zu wiederholen und am Ende des analysierten Bands die Geschwindigkei-

ten $V_x$, $V_y$, den Koordinaten x, y zuzuordnen, um eine EGP-Karte der Geschwindigkeiten zu erhalten;
- einen dritten Schritt des Entfernens der vom Operator bezeichneten starken Geräuscherzeuger, der darin besteht, die Leistung des bezeichneten Geräuscherzeugers zu schätzen, um den vom Geräuscherzeuger kommenden theoretischen Signalpegel zu berechnen und ihn vom realen Pegel zu subtrahieren, diese Subtraktion für jeden Frequenzkanal des analysierten Bands zu wiederholen.

2. Verfahren nach Anspruch 1, **dadurch gekennzeichnet, dass** die EGP-Karte der Positionen durch eine Wiederholung von Erfassungsvorgängen an der Gesamtheit der Frequenzkanäle erarbeitet wird, die das analysierte Band bilden, wobei jede Erfassung durch den Vergleich des verallgemeinerten Wahrscheinlichkeitsverhältnisses mit einem Schwellwert erhalten wird.

3. Verfahren nach Anspruch 1, **dadurch gekennzeichnet, dass** die Erarbeitung der EGP-Karte der Positionen und die Bestimmung von zugeordneten Geschwindigkeiten gleichzeitig durchgeführt werden, wobei die Berechnung der differentiellen Doppler-Effekte beim Erfassungskriterium berücksichtigt wird.

Observations $S_{ib}(f)$

Sélection des bouées participant à l'EGP monocanal — 99

Formation de la carte EGP monocanal — 100

Détection et extraction du résumé décisionnel de chaque EGP monocanal — 101

bande spectrale → test de fin — non / oui

Obtention de la carte EGP globale des positions par fusion des résumés décisionnels de chaque EGP monocanal — 102

Recherche des canaux f contributifs à un maximum désigné de la carte EGP globale des positions donnant un spectre $S_g(f)$ — 110

Obtention du spectre $S_c(f)$ du maximum et des décalages dopplers par roue par bouée — 111

Détermination des dopplers différentiels et des lieux d'ambiguité doppler — 112

test de fin — non / oui

Obtention de la carte EGP des vitesses avec les lieux d'ambiguité doppler — 120

Visualisation des cartes EGP position, vitesse et proposition d'un spectre pour chaque cible désignée et envoi des données pour un tracking et une classification ultérieur des cibles — 130

bande spectrale → test de fin — oui / non

Soustraction valeurs idéales / attendues — 144

Calcul des valeurs spectrales attendues — 143

Estimation puissance bruiteurs par canal f — 142

Pour chaque bruiteur recherche des canaux f — 141

Désignation des bruiteurs à éliminer — 140

Bruiteurs à éliminer? — oui / non FIN

Fig. 1

Découpage de la bande analysée en sous-bande DELT_f

boucle les différentes sous-bandes DELTA_f

boucle sur les
hypothèses de fréquence

Formulation d'une hypothèse en f

boucle sur les
hypothèses de position

Formulation d'une hypothèse en x, y

boucle sur les
hypothèses de vitesse

Formulation d'une hypothèse en Vx, Vy

Focalisation spectrale : obtention des composantes
spectrales des différentes bouées qui participeront
au calcul du rapport de vraissemblance généralisé

Calcul du rapport de vraissemblance généralisé
I(x, y, Vx, Vy, f)

Peak-picking du meilleur I(x, y, Vx, Vy, f) selon les hypothèses en (Vx, Vy)
(x, y) et f étant fixes, mémorisation de cette valeur deI pour constituer
la carte EGP des positions, mémorisation des (Vx, Vy) fournissant le maximum

Mémorisation de toutes les valeurs I(x, y, Vx, Vy, f) selon les hypothèses en (Vx, Vy)
(x, y) et f étant fixes, constitution d'une proto-carte EGP des vitesses

Mise à jour de la carte EGP des vitesses par peak-picking selon l'hypothèse
de position et ceci pour chaque hypothèse de vitesse, on se sert ici pour cette
comparaison de la proto-carte EGP des vitesses, mémorisation
des (x,y) donnant les maximums définissant la carte EGP des vitesses

Mise à jour des cartes EGP des positions et des vitesses par peak-picking
selon l'hypothèse de fréquence f, mémorisation des f donnant les maximums

Détection des cibles dans la carte EGP des positions selon la méthode décrite à
l'étape 1 (101) obtention du résumé décisionnel pour les positions détection des
cibles dans la carte EGP des vitesses selon la méthode décrite à l'étape 1 (101)
obtention du résumé décisonnel pour les vitesses

Fusion des résumés décisionnels de chaque sous-bande, obtention des deux
cartes globales EGP en position et vitesse selon le méthode décrite à l'étape 1 (102)
propositions de spectres pour les cibles les plus fortes désignées par l'opérateur

Fig. 2

## RÉFÉRENCES CITÉES DANS LA DESCRIPTION

**Documents brevets cités dans la description**

- FR 9203005
- FR 2688595